# EUROPEAN PATENT APPLICATION

(11) **EP 4 792 974 A1**
(43) Date of publication of application: **19.08.2026**
(21) Application number: 26157521.1
(22) Date of filing: 10.02.2026
(51) Int. Cl.: B23Q 1/00, B23B 31/175

(54) **CLAMPING SYSTEM**

(30) Priority: 12.02.2025 IT 202500002658
(71) Applicant: FCS System Srl, 31032 Casale sul Sile (TV) (IT)
(72) Inventor: CALZAVARA, Andrea, 31057 Silea (TV) (IT); TREVISIOL, Nico, 31052 Maserada sul Piave (TV) (IT)
(74) Representative: Caldon, Giuliano

(57) **Abstract**

Clamping system (1) comprising a tie-rod element (2), fixed to a semifinished product that must be held in position with respect to an abutment base, and a base body (3), removably fixed to the abutment base. The base body (3) is provided with a first seat (5), which extends along an axis (X) and is susceptible of removably receiving the tie-rod element (2), with a second seat (6) and with at least one guide channel (7), which communicates with the first and second seats (5, 6) and extends along a corresponding direction (Y) transverse to the axis (X). The clamping system (1) comprises at least one retaining element (8), which is slidably inserted into the guide channel (7) between a retaining position, in which it protrudes into the first seat (5) to place itself in abutment against the tie-rod element (2), locking it, and a release position, in which it is spaced from the tie-rod element (2), freeing it. This clamping system (1) comprises a slider (9), which is slidably inserted into the second seat (6) along a movement direction (Z) transverse to the direction (Y), is mechanically connected to the retaining element (8) by means of motion transmission means (10) and is movable between a lock position and an unlock position, in which it holds the retaining element (8) in the retaining and release positions, respectively. The motion transmission means (10) comprise at least one transmission arm (11), which is mechanically connected, at a first end (11') thereof, to the slider (9) and, at a second end (11") thereof, to the retaining element (8).

## Description

### Field of application

The present invention relates to a clamping system for holding a semifinished product in position with respect to an abutment base, according to the preamble of independent claim number 1.

In particular, the present clamping system is advantageously used in the mechanical industry to hold bodies in position that are intended to undergo various machining operations.

More in particular, the clamping system of the present invention is advantageously usable to hold in position, with respect to the abutment base, in particular of a machine tool (e.g. of the CNC type), a body to be machined, which is advantageously made of metallic material, or composite material, or any other material.

The invention therefore falls within the context of the precision mechanics industry.

### State of the art

In the field of machining mechanical components through turning, milling, drilling, etc., there is a particular need to hold, in a stable manner, the semifinished products to be machined.

For this purpose, zero-point clamping systems are known, provided with a base body, which is intended to be removably fixed to an abutment base forming part of a machine tool, and with a tie-rod element, which is intended to be fixed to the semifinished product that is to be held in position with respect to the aforementioned abutment base.

The base body of the clamping system of the known type is provided with a first seat, which is intended to receive the tie-rod element inside it, and with two horizontal channels, which are transverse to the aforementioned first seat and communicate with it. Inside each channel a jaw is provided, which is movable between a constraint position, in which it protrudes partly from the corresponding channel in the first seat to place itself in abutment against the tie-rod element in order to lock it, and a disengaging position, in which it is retracted inside the corresponding channel to be spaced from the tie-rod element and allow the latter to be inserted into and extracted from the first seat.

A piston is also provided, which is inserted into a second seat of the base body, is movable under the action of a pressurised fluid along a vertical direction (and therefore perpendicular to the channels of the jaws) and comprises two cam elements, each of which intercepts one of the channels and is inserted into a guide groove made recessed on a corresponding jaw and having an extension inclined with respect both to the horizontal direction and to the vertical direction.

In this way, when the piston is moved in its second seat, the coupling of the cam elements with the guide grooves causes the vertical motion of the piston to be transformed into a horizontal motion of the jaws between the constraint position and the disengaging position.

An example of these known clamping systems is described in document EP 2052808 A1.

However, the clamping systems of the known type briefly described above have proven to have drawbacks in practice.

A major drawback of the clamping systems of the known type lies in the fact that, even when exerting a force of not particularly high magnitude on the tie-rod element while the jaws are in the constraint position, it is possible to remove the abovementioned tie-rod element from the first seat by forcing the jaws from the constraint position to the disengaging position, overcoming the force exerted on them by the piston.

In fact, when the tie-rod element is inserted into the first seat of the base body and the jaws are in the constraint position, the jaws and the tie-rod element are in contact along their surfaces inclined with respect to the vertical direction and to the horizontal direction. This causes that, when a vertical force directed upwards is exerted to extract the tie-rod element, this force is transmitted through the inclined contact surfaces, generating a horizontal component, and therefore it tends to push the jaws from the constraint position to the disengaging position. This horizontal component of the force is also transmitted from the jaws to the cam elements mounted on the piston through the guide grooves, which are, in turn, inclined with respect to the horizontal direction and to the vertical direction. In this way, the horizontal component of the force exerted on the jaws is transformed, due to the inclination of the guide grooves, into a vertical component of the force exerted on the cam elements and, therefore, on the piston, essentially with a one to one ratio. Consequently, by exerting a force on the tie-rod element, a force is directly exerted on the piston which can cause the latter to move, overcoming the force exerted by the pressurised fluid with which the second seat is supplied, thus entailing the risk that the jaws may open in the disengaging position even when they should not.

### Presentation of the invention

In this situation, the problem underlying the present invention is therefore to overcome the drawbacks of the known art by providing a clamping system for holding a semifinished product in position with respect to an abutment base, which allows the tie-rod element fixed to the semifinished product to be securely retained, reducing the risk that the tie-rod element may be accidentally removed.

A further object of the present invention is to provide a clamping system for holding a semifinished product in position with respect to an abutment base, which is simple and economical to manufacture and be used.

A further object of the present invention is to provide a clamping system for holding a semifinished product in position with respect to an abutment base, which has small dimensions.

A further object of the present invention is to provide a clamping system for holding a semifinished product in position with respect to an abutment base, which is completely reliable in operation.

### Brief description of the drawings

The technical characteristics of the invention, according to the above objects, are clearly evident from the content of the below claims, and the advantages of the invention will be more evident in the detailed description that follows, made with reference to the attached drawings, which represent a purely illustrative and non-limiting form of embodiment, wherein:

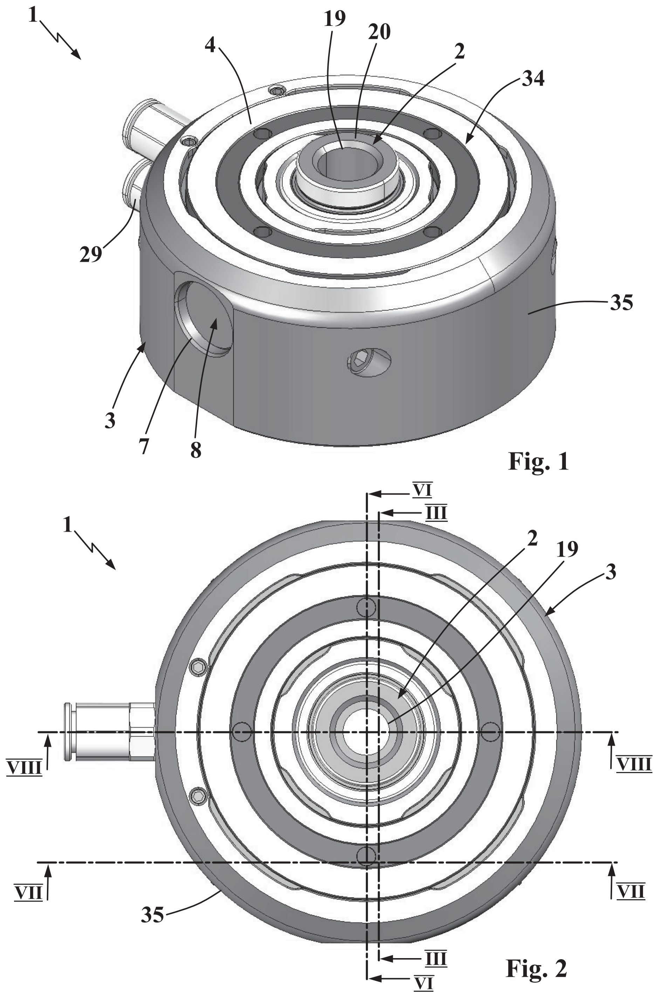

- Fig. 1 shows a perspective view of a clamping system, object of the present invention, in accordance with a preferred embodiment;
- Fig. 2 shows a top plan view of the clamping system of figure 1;

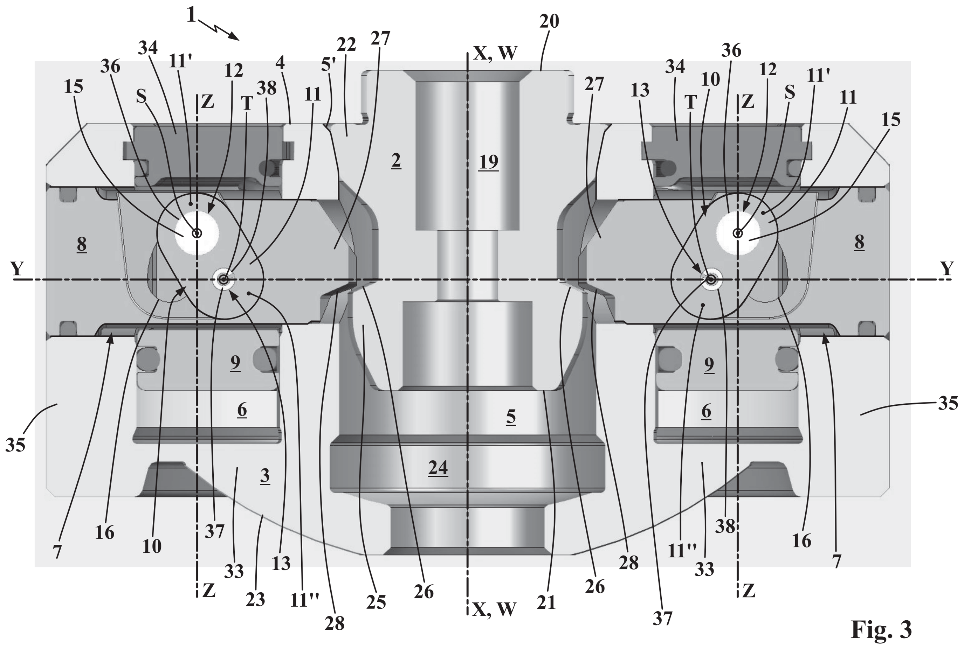

- Fig. 3 shows a side sectional view of the clamping system of figure 1 with retaining elements in a release position and with a slider in an unlock position, wherein the section is taken along line **III-III** of figure 2;

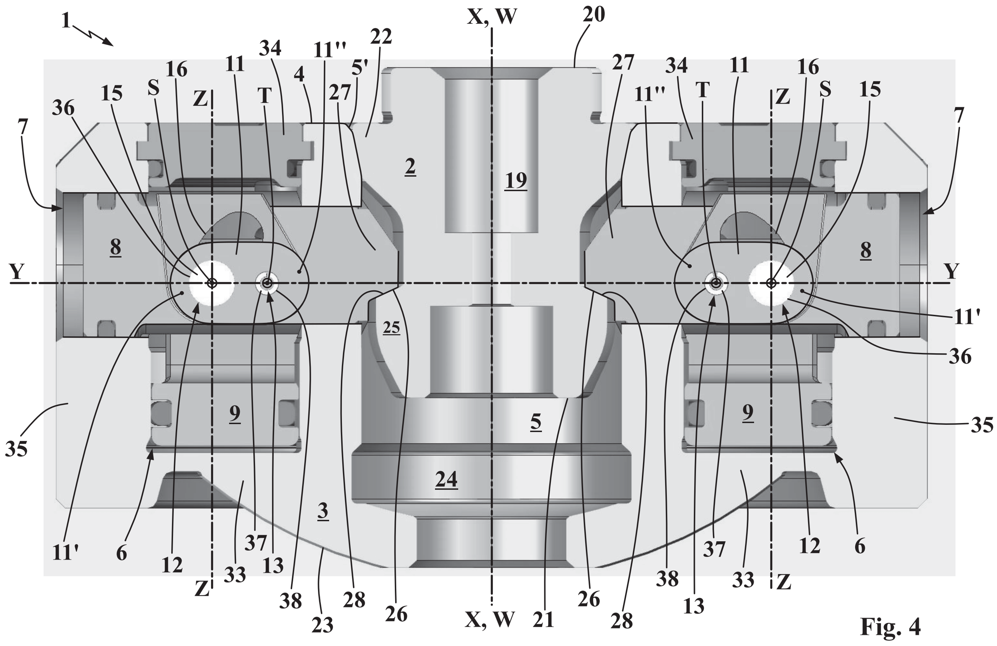

- Fig. 4 shows a perspective view of the clamping system of figure 1 with the retaining elements in a retaining position and with the slider in a lock position, wherein the section is taken along the same trace III-III of figure 2;

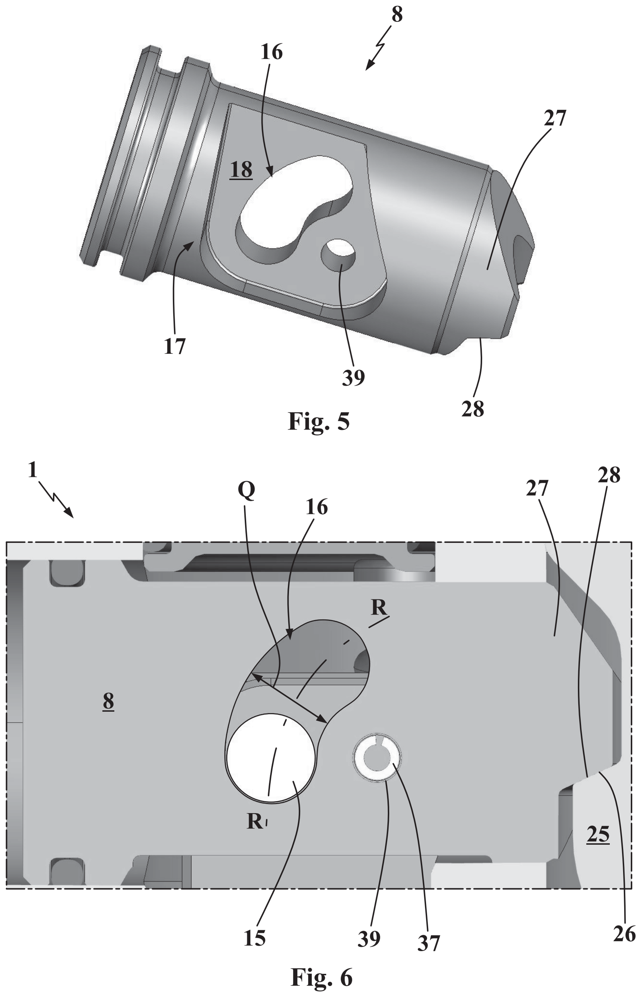

- Fig. 5 shows a perspective view of a retaining element of the clamping system of figure 1;
- Fig. 6 shows a detail of a side sectional view of the clamping system of figure 1, where a retaining element in the retaining position, a passage opening of the aforementioned retaining element and a first pivot pin of the slider placed to pass through the passage opening without touching the retaining element itself are visible, wherein the section is taken along line VI-VI in figure 2;

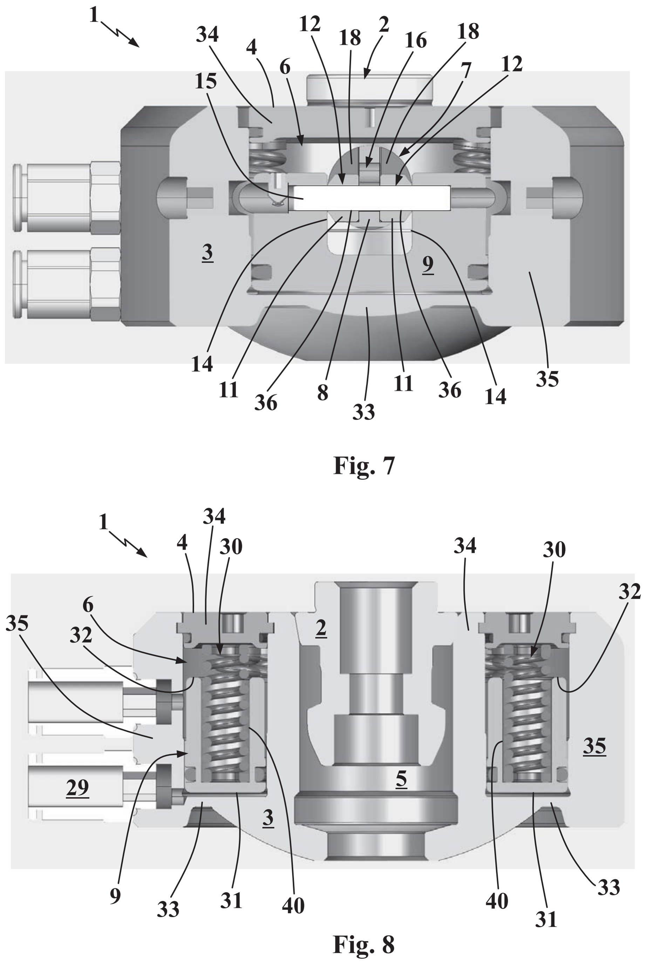

- Fig. 7 shows a side sectional view of the clamping system of figure 1 with the retaining elements in the retaining position and the slider in the lock position, wherein the section is taken along line VII-VII of figure 2;
- Fig. 8 shows a side sectional view of the clamping system of Figure 1 with the slider in the lock position, in which the section is taken along line VIII-VIII of Figure 2.

### Detailed description of a preferred embodiment

With reference to the accompanying drawings, a clamping system according to the present invention is indicated as a whole with 1.

This clamping system 1 is advantageously intended to be used to hold a semifinished product in position with respect to an abutment base, and in particular is intended to hold the semifinished product itself at a predetermined position that is available for the machining operations to which it is intended to be subjected.

More in detail, the abutment base may belong to a machine tool, such as a CNC machine tool, arranged to subject the semifinished product to machining operations, such as chip removal (milling, surface finishing, drilling, etc.).

Differently, the abutment base may be a separate component from the operating machine, which component is intended to be installed adjacently to the latter and is arranged to hold the semifinished product in position with respect to a tool device of the aforementioned machine tool by means of the clamping system 1 object of the present invention.

According to the invention, the clamping system 1 comprises a tie-rod element 2, which is intended to be fixed to the semifinished product.

Advantageously, the tie-rod element 2 extends, with an elongated shape, along a main direction W thereof between a first terminal part 20, which is intended to be placed in contact with the semifinished product, and an opposite second terminal part 21 and is preferably provided with a longitudinal hole 19, which extends in particular along the aforementioned main direction W between the first terminal part 20 and the second terminal part 21.

In this way, this tie-rod element 2 can be fixed to the semifinished product by means of a screw inserted into the aforementioned longitudinal hole 19 and screwed into a corresponding fixing hole, made on the semifinished product and at least partially threaded.

In particular, at the second terminal part 21, the through longitudinal hole 19 has an enlarged section, in order to accommodate the head of the screw without the latter protruding from the tie-rod element 2 after the tie-rod element 2 itself has been fixed to the semifinished product.

Furthermore, the tie-rod element 2 is preferably provided with an annular shoulder 22 spaced from the first terminal part 20.

In this way, the part of tie-rod element 2 that extends between the aforementioned first terminal part 20 and the annular shoulder 22 can be inserted into an enlarged portion of the fixing hole of the semifinished product into which the screw is screwed, thus precisely setting the position of the tie-rod element 2 on the semifinished product.

Furthermore, the present clamping system 1 comprises a base body 3 intended to be removably fixed to the abutment base and provided with a support face 4, which is intended to receive, in abutment, the semifinished product to which the tie-rod element 2 is fixed, and a first seat 5, which extends along a reference axis X thereof transverse to the support face 4, has an access opening 5' thereof on this support face 4 and is susceptible of receiving the tie-rod element 2 removably inside it.

Advantageously, the reference axis X is orthogonal to the support face 4.

Preferably, when the tie-rod element 2 is removably inserted into the first seat 5, the main direction W of the tie-rod element 2 coincides with the reference direction X of the first seat 5.

Advantageously, the base body 3 is provided with an abutment surface 23 opposite the support face 4.

In accordance with an embodiment not illustrated in the attached figures, the abutment surface 23 is intended to be placed directly on the abutment base. In this case, for example, the base body 3 is provided with one or more fastening holes passing between the support face 4 and the abutment surface 23 to allow the base body 3 itself to be fixed to the abutment base by means of one or more corresponding screws inserted into appropriate threaded holes made in the abutment base.

Differently, in accordance with the preferred embodiment illustrated in the attached figures, the present clamping system 1 is arranged to be integrated into a clamping device comprising at least one main body, which is intended to be removably fixed to the abutment base and is arranged to carry, mounted thereon, the base body 3 of the clamping system 1 in a movable manner. In this way, it is possible to fix the base body 3 to the abutment base through the main body of the clamping device and adjust the position of the base body 3 with respect to the aforementioned main body as required. For example, in order to be able to mount the base body 3 of the present clamping system 1 on the main body of the clamping device in a movable manner, this base body 3 is advantageously provided with a coupling seat 24 (communicating with the first seat 5 in accordance with the illustrated embodiment), which opens onto the abutment surface 23 and is arranged to receive a holding element mechanically connected to the main body of the clamping device (e.g. the enlarged head of a tie rod mechanically connected to the main body of the clamping device), and furthermore, the abutment surface 23 has a substantially spherical cap shape (so that the base body 3 can be tilted as required with respect to the main body of the clamping device).

Furthermore, the base body 3 comprises at least one second seat 6, which is adjacent to the first seat 5, and at least one guide channel 7, which communicates with the first seat 5 and with the second seat 6 and extends in the base body 3 along a corresponding extension direction Y transverse to the reference axis X.

The clamping system 1 according to the invention also comprises at least one retaining element 8, which is slidably inserted into the guide channel 7 and is movable along the extension direction Y of the guide channel 7 between a retaining position, in which it protrudes from the guide channel 7 into the first seat 5 to place itself in abutment against the tie-rod element 2, locking it, and a release position, in which it is spaced apart from the tie-rod element 2, freeing it.

Advantageously, the retaining element 8 has only one degree of freedom which allows it to slide in the guide channel 7 along the extension direction Y of the latter.

Therefore, preferably, other movements of the retaining element 8 other than sliding along the extension direction Y (such as rotations or translations along directions transverse to the extension direction Y) are completely prevented (in particular by the inner surface of the base body 3 which delimits the guide channel 7) or allowed to a negligible extent.

In order to simplify the way in which the retaining element 8 in the retaining position comes into contact with the tie-rod element 2 to lock it, the extension direction Y of the guide channel 7 (in which the retaining element 8 is slidably inserted) is advantageously orthogonal to the reference direction X of the first seat 5.

Preferably, the tie-rod element 2 is provided with an enlarged portion 25 (in particular at the second terminal part 21 or adjacently to the second terminal part 21) on which a drag surface 26 extends, that is directed towards the access opening 5', when the tie-rod element 2 is removably inserted into the first seat 5, and is inclined, at least in a part thereof, with respect to the reference axis X and the extension direction Y of the guide channel 7.

Furthermore, the retaining element 8 is preferably provided with a terminal portion 27 protruding from the guide channel 7 inside the first seat 5, at least when the retaining element 8 itself is in the retaining position, and provided with a surface of abutment 28, which is directed towards an opposite direction to the access opening 5' of the first seat 5, is inclined with respect to the reference axis X and the extension direction Y, and is arranged to place itself in abutment against the drag surface 26 of the enlarged portion 25 of the tie-rod element 2 with the retaining element 8 in the retaining position.

In this way, when the retaining element 8 is moved into the retaining position, the surface of abutment 28 acts on the drag surface 26 of the enlarged portion 25 of the tie-rod element 2 to drag the abovementioned tie-rod element 2 mostly towards the inside of the first seat 5 and bring the semifinished product in abutment, under pressure, against the support face 4 of the base body 3, thus precisely locking the tie-rod element 2 and the semifinished product in position.

In accordance with an embodiment not illustrated in the attached figures, only one retaining element 8 is provided.

Differently, in accordance with the preferred embodiment illustrated in the attached figures and as will be better described below, multiple retaining elements 8 are provided, for example two retaining elements 8 opposite each other with respect to the reference axis X of the first seat 5, so that the tie-rod element 2 is securely retained at multiple points and the stresses on the components of the present clamping system 1 are distributed as evenly as possible.

Preferably, the drag surface 26 of the enlarged portion 25 of the tie-rod element 2 has a substantially truncated conical shape, so as to avoid having to check the correct orientation of the tie-rod element 2 with respect to the retaining element 8 or with respect to the retaining elements 8 (if more than one are provided, as in the preferred embodiment).

In particular, in accordance with the preferred embodiment illustrated, the present clamping system 1 is therefore a zero-point clamping system.

Furthermore, in order to be able to move the retaining element 8 (or the retaining elements 8 if more than one), the present clamping system 1 comprises at least one slider 9, which is slidably inserted into the second seat 6 along a movement direction Z transverse to the extension direction Y, is mechanically connected at least to the retaining element 8 by means of motion transmission means 10 and is movable between a lock position, in which it holds at least the retaining element 8 in the retaining position by means of the motion transmission means 10, and an unlock position, in which it holds at least the retaining element 8 in the release position by means of the motion transmission means 10.

Advantageously, slider 9 has only one degree of freedom which allows it to slide in the second seat 6 along the movement direction Z.

Therefore, preferably, other movements of the slider 9 other than sliding along the movement direction Z (such as rotations or translations along directions transverse to the movement direction Z) are completely prevented (in particular by the inner surface of the guide body 3 that delimits the second seat 6) or allowed to a negligible extent.

In order to be able to move the slider 9 in a simple manner, the aforementioned slider 9 is advantageously a piston and the present clamping system 1 comprises at least one supply conduit 29 made on the base body 3, connected in fluid communication with the second seat 6 and configured to convey a pressurised fluid against the slider 9, pushing it from one of the lock position and the unlock position towards the other of the lock position and the unlock position.

Alternatively or in addition to the supply conduit 29, the clamping system 1 advantageously comprises elastic means 30 arranged in the second seat 6 and arranged to force the slider 9 into one of the lock position and the unlock position.

In accordance with the preferred embodiment illustrated in the attached figures, the present clamping system 1 is provided both with a supply conduit 29 and with elastic means 30.

More in detail, in this case, the elastic means 30 are arranged to force the slider 9 into one of the lock position and the unlock position, and the supply conduit 29 is shaped to convey the pressurised fluid against the slider 9 to push it into the other of the lock position and the unlock position, causing the elastic means 30 to yield elastically.

In this way, the elastic means 30 always keep the slider 9 in one of the lock position and the unlock position, and a pressurised fluid can be introduced, under pressure, into the second seat 6 through the supply conduit 29 only when it is necessary to move the slider 9 into the other of the lock position and the unlock position.

Advantageously, the piston-shaped slider 9 is provided with a first face 31 and an opposite second face 32, which are preferably transverse (in particular orthogonal) to the movement direction Z.

In order to cause the elastic means 30 to yield elastically when it is necessary to move the slider 9, the supply conduit 29 is preferably shaped to convey the pressurised fluid against the first face 31 of the slider 9, and the elastic means 30 are arranged to act on the piston 9 from the side of its second face 32.

In particular, the second seat 6 extends between a bottom wall 33 and a closure wall 34 of the base body 3 and is laterally bounded by at least one side wall 35 extending between the bottom wall 33 and the closure wall 34.

Furthermore, in particular, in accordance with the preferred embodiment which provides both the elastic means 30 and the supply conduit 29, the elastic means 30 are interposed between the closure wall 34 and the piston-shaped slider 9, and the supply conduit 29 communicates with the second seat 6 at to the bottom wall 33 or adjacently to it.

Furthermore, the elastic means 30 advantageously comprise one or more coil springs interposed between the aforementioned closure wall 34 and the piston 9.

Preferably, the slider 9 is provided with one or more containment seats 40, which open onto the second face 32 of the slider 9 itself, and furthermore, the elastic means 30 comprise a coil spring for each containment seat 40, which coil spring is at least partially contained in the corresponding containment seat 40 and is pre-compressed between the closure wall 34 and the piston 9 itself.

In order to allow easy arrangement of the piston 9 and the elastic means 30 in the second seat 6, advantageously, at least one of the bottom wall 33 and the closure wall 34 of the base body 3 is removably fixed to the side wall 35.

For example, as can be seen in the attached figures, the closure wall 34 is removably fixed to the side wall 35.

Furthermore, in particular, the support face 4 of the base body 3 extends at least partially over the removable closing wall 34.

Furthermore, preferably, in order to allow easy insertion of the retaining element 8 into the guide channel 7, the aforementioned guide channel 7 extends, in a through manner, from the side wall 35 of the base body 3 up to the first seat 5.

In this way, during assembly phase, it is possible to insert the retaining element 8 laterally into the guide channel 7 through an opening in the guide channel 7 itself which opens onto the side wall 35 of the base body 3.

Even more preferably, the elastic means 30 are arranged to force the slider 9 into the lock position and the supply conduit 29 is shaped to convey the pressurised fluid against the slider 9 to push it into the unlock position, causing the elastic means 30 to yield elastically.

In this way, the elastic means 30 hold the slider 9 in the lock position and - by means of it and the motion transmission means 10 - the retaining element 8 in the retaining position, thus causing that it is necessary to introduce the pressurised fluid into the second seat 6 through the supply conduit 29 to bring the retaining element 8 into release position only when the tie-rod element 2 must be inserted into the first seat 5 to lock the semifinished product to be subjected to a machining operation and when the tie-rod element 2 must be extracted from the first seat 5 to free the semifinished product after it has been subjected to the machining operation.

Otherwise, in accordance with an embodiment not illustrated in the attached figures, the present clamping system 1 has no elastic means 30 and is provided with two supply conduits 29. In this case, one supply conduit 29 is shaped to convey the pressurised fluid against the slider 9 (e.g. against its first face 31), pushing it from the lock position to the unlock position, and the other supply conduit 29 is shaped to convey the pressurised fluid against the slider 9 (e.g. against its second face 32 opposite the first face 31), pushing it from the unlock position to the lock position.

According to the idea underlying the present invention, the motion transmission means 10 comprise at least one transmission arm 11 extending between a first end 11', which is mechanically connected (directly or indirectly by means of further components of the present clamping system 1) to the slider 9, and a second end 11", which is mechanically connected (directly or indirectly by means of further components of the present clamping system 1) to the retaining element 8. This transmission arm 11 is arranged to rotate with respect to the slider 9 and the retaining element 8, with the slider 9 moving between the lock position and the unlock position to induce, by means of the transmission arm 11 itself, the retaining element 8 to move between the retaining position and the release position.

Advantageously, the transmission arm 11 is advantageously hinged, by means of a first hinge point 12 thereof obtained at the first end 11', to the slider 9.

In this way, the first end 11' of the transmission arm 11 is mechanically connected to the slider 9 due to the first hinge point 12.

Differently, in accordance with an embodiment that is not illustrated in the attached figures and that does not provide for the first hinge point 12, the motion transmission means 10 comprise an elastic return element (in particular mechanically connected to the base body 3 and the retaining element 8) arranged to force the retaining element 8 from the retaining position to the release position and susceptible of yielding elastically to allow the retaining element 8 to move from the release position to the retaining position, the slider 9 is provided with a first thrust surface directed towards the retaining element 8 and the first end 11' of the transmission arm 11 is provided with a first rounded abutment surface that is placed against the first thrust surface of the slider 9.

In this way, operationally, when the slider 9 is moved from the unlock position to the lock position, it acts with its first thrust surface against the first rounded abutment surface of the first end 11' of the transmission arm 11, causing said first end 11' to translate along the movement direction Z, while the first rounded abutment surface allows the transmission arm 11 to rotate with respect to the slider 9 and the transmission arm 11 itself pushes, by mean of its second end 11", the retaining element 8 from the release position to the retaining position. Furthermore, operationally, when the slider 9 is moved from the lock position to the unlock position, the elastic return element of the motion transmission means 10 pushes the retaining element 8 from the retaining position towards the release position and, therefore, also pushes the second end 11" of the transmission arm 11 to shift along the extension direction Y, while the first rounded abutment surface of the first end 11' is kept against the first thrust surface of the slider 9 and follows the movement of the slider 9 itself along the movement direction Z, causing the transmission arm 11 to rotate.

Therefore, in accordance with this unillustrated embodiment, the first end 11' of the transmission arm 11 is mechanically connected to the slider 9 by means of its first rounded abutment surface, the first thrust surface of the slider 9 and the elastic return element of the motion transmission means 10.

Furthermore, the aforementioned transmission arm 11 is advantageously hinged, by means of a second hinge point 13 obtained at the second end 11", to the retaining element 8.

In this way, the second end 11" of the transmission arm 11 is mechanically connected to the retaining element 8 due to the second hinge point 13.

Differently, in accordance with an embodiment that is not illustrated in the accompanying figures and that does not provide for the second hinge point 13, the motion transmission means 10 comprise an elastic return element (in particular mechanically connected to the base body 3 and the retaining element 8) arranged to force the retaining element 8 from the retaining position towards the release position and susceptible of yielding elastically to allow the retaining element 8 to move from the release position to the retaining position, the retaining element 8 is provided with a second thrust surface directed towards the slider 9 and the second end 11" of the transmission arm 11 is provided with a second rounded abutment surface hat is placed against the second thrust surface of the retaining element 8.

In this way, operationally, when the slider 9 is moved from the unlock position to the lock position, it (being mechanically connected to the first end 11' of the transmission arm 11) causes the first end 11' to shift along the movement direction Z, while the transmission arm 11 rotates - due to the second rounded abutment surface placed against the second thrust surface of the retaining element 8 - and moves the aforementioned retaining element 8 along the extension direction Y from the release position to the retaining position, acting on the second thrust surface. Furthermore, operationally, when the slider 9 is moved from the lock position to the unlock position, the elastic return element of the motion transmission means 10 pushes the retaining element 8 from the retaining position towards the release position and, therefore, also pushes the second end 11" of the transmission arm 11 to shift along the extension direction Y, while the second rounded abutment surface of the second end 11" allows the rotation of the transmission arm 11 and the first end 11' follows the slider 9 in its translation along the movement direction Z.

Therefore, in accordance with this embodiment not illustrated, the second end 11" of the transmission arm 11 is mechanically connected to the retaining element 8 by means of its second rounded abutment surface, the second thrust surface of the retaining element 8 and the elastic return element of the motion transmission means 10.

Consequently, different embodiments are possible, which differ from each other for the different ways in which the first end 11' and the second end 11" of the transmission arm 11 are mechanically connected to the slider 9 and the retaining element 8, respectively. For example, in accordance with the preferred embodiment illustrated in the attached figures, the transmission arm 11 is hinged, by means of a first hinge point 12 thereof obtained at the first end 11', to the slider 9 and, by means of a second hinge point 13 thereof obtained at the second end 11", to the retaining element 8.

Differently, in accordance with an embodiment not illustrated, the first hinge point 12 is provided but not the second hinge point 13, in place of which the elastic return element of the motion transmission means 10, the second thrust surface of the retaining element 8 and the second rounded abutment surface of the second end 11" of the transmission arm 11 are used to mechanically connect the second end 11" to the retaining element 8.

Also differently, in accordance with a further embodiment not illustrated, the second hinge point 13 is provided but not the first hinge point 12, in place of which the elastic return element of the motion transmission means 10, the first thrust surface of the slider 9 and the first rounded abutment surface of the first end 11' of the transmission arm 11 are used to mechanically connect the first end 11' to the slider 9.

Differently, an embodiment is also possible wherein neither the first hinge point 12 nor the second hinge point 13 is provided, since the elastic return element of the motion transmission means 10, the first rounded abutment surface of the first end 11' of the transmission arm 11 and the first thrust surface of the slider 9 (to mechanically connect the first end 11' and the slider 9), the second rounded abutment surface of the second end 11" of the transmission arm 11 and the second thrust surface of the retaining element 8 (to mechanically connect the second end 11" and the retaining element 8) are provided.

Advantageously, the transmission arm 11 is rotatable with respect to the slider 9 about a first rotation axis S, which intersects the first end 11' and is orthogonal to the movement direction Z.

Preferably, in accordance with the illustrated preferred embodiment, this first rotation axis S is placed at the first hinge point 12.

Differently, in accordance with a possible embodiment not illustrated which does not have the first hinge point 12, the first rotation axis S is placed at the centre of curvature of the first rounded abutment surface of the first end 11' of the transmission arm 11.

Furthermore, the transmission arm 11 is advantageously rotatable with respect to the retaining element 8 about a second rotation axis T, which intersects the second end 11" and is orthogonal to the extension direction Y of the guide channel 7 in which the retaining element 8 is slidably inserted.

Preferably, in accordance with the illustrated preferred embodiment, this second rotation axis T is placed at the second hinge point 13.

Differently, in accordance with a possible embodiment not illustrated which does not have the second hinge point 13, the second rotation axis T is placed at the centre of curvature of the second rounded abutment surface of the second end 11" of the transmission arm 11.

Preferably, the first rotation axis S and the second rotation axis T are parallel to each other and both orthogonal to a plane containing the movement direction Z and the extension direction Y, which are in particular incident to each other.

Advantageously, the transmission arm 11 is arranged to perform a roto-translational motion, wherein the first end 11' of the transmission arm 11 (in particular the first hinge point 12) performs a displacement along the movement direction Z due to the slider 9 moving between the lock position and the unlock position, and wherein, due to the displacement of the abovementioned first end 11' (in particular due to the displacement of the abovementioned first hinge point 12), the second end 11" of the transmission arm 11 (in particular the second hinge point 13) performs a displacement along the extension direction Y of the guide channel 7 to move the retaining element 8 between the retaining position and the release position.

More in detail, by adopting motion transmission means 10 comprising a transmission arm 11 in the clamping system 1, it is possible - during the design phase - to determine the length of the transmission arm 11 and the extension of the movement of the slider 9 along the movement direction Z suitable for minimising or cancelling the torque that occurs on the transmission arm 11 due to the component of the force transmitted to the retaining element 8 when it is in the retaining position and, at the same time, a force is applied to the tie-rod element 2 that tends to extract it from the first seat 5.

In fact, more in detail, when, to the tie-rod element 2, a force is applied that tends to extract it from the first seat 5 (therefore a force along the reference axis X of the first seat 5), the drag surface 26 of the enlarged portion 25 of the tie-rod element 2 transmits at least one component of the force along the extension direction Y of the guide channel 7 to the surface of abutment 28 of the end portion 27 of the retaining element 8. Operationally, therefore, this component of the force along the extension direction Y tends to push the retaining element 8 from the retaining position towards the release position, but the transmission arm 11 has been dimensioned so that the resulting torque on it is zero or almost zero when the retaining element 8 is in the retaining position and the slider 9 is in the lock position. Therefore, if the torque occurring on the transmission arm 11 is zero or almost zero, this transmission arm 11 does not tend to rotate and, thus, the slider 9 cannot be accidentally pushed from the lock position (which corresponds to the retaining position of the retaining element 8) to the unlock position (which corresponds to the release position of the retaining element 8). This implies that an extremely high force must be applied to the tie-rod element 2 in order to extract it from the first seat 5 when the retaining element 8 is in the retaining position, thus significantly reducing the risk that the tie-rod element 2 may be accidentally removed from the first seat 5.

Advantageously, when the slider 9 is in the lock position, the first end 11' and the second end 11" of the transmission arm 11 are aligned parallel to the extension direction Y of the guide channel 7 or along the extension direction Y of the guide channel 7.

In particular, in accordance with the preferential embodiment illustrated in the attached figures, when the slider 9 is in the lock position, the first hinge point 12 and the second hinge point 13 are aligned parallel to the extension direction Y of the guide channel 7 or along the extension direction Y of the guide channel 7.

Due to this, it is possible to cancel (completely or almost completely) the torque that occurs on the transmission arm 11 when the retaining element 8 is in retaining position and, to the tie-rod element 2, a force is applied that tends to extract it from the first seat 5. In fact, the component of the force that is transmitted from the tie-rod element 2 to the retaining element 8 along the extension direction Y encounters the first end 11' and the second end 11" aligned parallel to each other or along (and thus, in the preferred embodiment, encounters the first hinge point 12 and the second hinge point 13 aligned parallel to each other or along) the extension direction Y itself, with the consequence that this component has a zero moment arm with respect to the first end 11' (in particular with respect to the first hinge point 12 hinged to the slider 9) and is therefore unable to exert any torque.

Advantageously, the movement direction Z of the slider 9 is orthogonal to the extension direction Y of the guide channel 7 in which the retaining element 8 is slidably inserted.

In this way, due to the alignment of the first end 11' and the second end 11" (in particular of the first hinge point 12 and the second hinge point 13) parallel to or along the extension direction Y when the slider 9 is in the lock position (i.e., in other words, when the retaining element 8 is in the retaining position), it is possible to cancel or almost cancel the torque on the transmission arm 11 and, due to the orthogonality of the movement direction Z of the slider 9 with respect to the extension direction Y of the guide channel 7, it is possible to compensate - by means of reaction forces exerted by the inner surface of the base body 3 that delimits the second seat 6 - for the component of the force that is transmitted from the tie-rod element 2 to the retaining element 8 along the extension direction Y itself.

In fact, operationally, the component of the force on the retaining element 8 along the extension direction Y is transmitted to the transmission arm 11 through the second hinge point 13 and is transmitted to the slider 9 through the first hinge point 12, while the slider 9 is movable in the second seat 6 only along the movement direction Z and the surfaces of the base body 3 that delimit this second seat 6 (which allow only the movement of the slider 9 along the movement direction Z) exert a reaction force opposite to the force component along the extension direction Y orthogonal to the movement direction Z.

Preferably, the movement direction Z is parallel to the reference axis X of the first seat 5, so as to keep the width of the base body 3 as small as possible along directions transverse to the reference axis X itself.

Advantageously, when the slider 9 is in the unlock position, the first end 11' and the second end 11" of the transmission arm 11 are aligned along a direction inclined with respect to the movement direction Z and the extension direction Y.

In particular, in accordance with the illustrated preferred embodiment, when the slider 9 is in the unlock position, the first hinge point 12 and the second hinge point 13 are aligned along a direction inclined with respect to the movement direction Z and the extension direction Y.

More in detail, this implies that, when the slider 9 is in the unlock position and the retaining element 8 is in the release position, the first and second ends 11', 11" (in particular the first and second hinge points 12, 13) are not aligned along a direction parallel to or coincident with the movement direction Z itself, thus avoiding the risk that the slider 9 and the retaining element 8 may accidentally lock during their movements and require manual intervention by an operator to allow the clamping system 1 to resume functioning correctly.

In fact, operationally, if the first and second hinge points 12, 13 were aligned along a direction parallel to or coincident with the movement direction Z of the slider 9 when the slider 9 is in the unlock position and the slider 9 were actuated to move from the unlock position to the lock position, the slider 9 would exert, through the first hinge point 12, a force on the transmission arm 11 directed along the movement direction Z, which force would then be discharged from the transmission arm 11 - through the second hinge point 13 - to the retaining element 8 which can only shift along the extension direction Y (in particular, perpendicular to the movement direction Z, as explained above) of the guide channel 7 (and therefore this force directed along the movement direction Z and transmitted to the retaining element 8 would simply be compensated by a reaction force exerted by the inner surface of the base body 3 that delimits the guide channel 7 in which the retaining element 8 is slidably inserted).

Advantageously, the motion transmission means 10 comprise two transmission arms 11 for the retaining element 8, each of which extends between a first end 11', which is mechanically connected to the slider 9, and a second end 11", which is mechanically connected to the retaining element 8, and is arranged to rotate with respect to the slider 9 and the retaining element 8, when the slider 9 moves between the lock position and the unlock position to induce, through the transmission arm 11 itself, the retaining element 8 to move between the retaining position and the release position.

More in detail, the first ends 11' of the two transmission arms 11 are positioned side by side along a direction orthogonal to the movement direction Z, and the second ends 11" of the two transmission arms 11 have the retaining element 8 interposed between them and are placed side by side along a direction orthogonal to the extension direction Y of the guide channel 7 in which the retaining element 8 is slidably inserted.

In particular, in accordance with the preferred embodiment illustrated in the attached figures, the motion transmission means 10 comprise two transmission arms 11 for the retaining element 8, each of which is hinged, at a first hinge point 12 thereof, to the slider 9 and, at a second hinge point 13 thereof, to the retaining element 8.

More in detail, the first hinge points 12 of the two transmission arms 11 are aligned along a direction orthogonal to the movement direction Z, and the second hinge points 13 of the two transmission arms 11 are aligned along a direction orthogonal to the extension direction Y of the guide channel 7 in which the retaining element 8 is slidably inserted.

Preferably, the two transmission arms 11 are placed in a mirror-like way with respect to a plane containing the movement direction Z of the slider 9 and the extension direction Y of the guide channel 7 in which the retaining element 8 is slidably inserted.

In this way, therefore, the arrangement of the two transmission arms 11 placed in a mirror-like way guarantees a balanced transmission of stresses between the slider 9 and the retaining element 8 and movement of the slider 9 and the retaining element 8 without the risk of jamming.

Advantageously, the slider 9 also comprises two shoulders 14, which delimit at least part of the guide channel 7 and between which the retaining element 8 is interposed. Furthermore, the transmission arm 11 is advantageously hinged, at its first hinge point 12, to at least one of the shoulders 14 of the slider 9.

In this way, by causing the shoulders 14 of the slider 9 to delimit at least part of the guide channel 7 and the transmission arm 11 to be hinged to at least one of the shoulders 14, it is possible to reduce the overall height of the present clamping system 1, in particular along the reference axis X of the first seat 5.

The slider 9 also preferably comprises at least one first pivot pin 15, which extends between the two shoulders 14 along the first rotation axis S (which, as previously explained, is advantageously placed at the first hinge point 12) and crosses the transmission arm 11 at its first hinge point 12.

In particular, the transmission arm 11 is equipped with a first hole 36, which extends, in a through manner, along the first rotation axis S at the first hinge point 12, and the first pivot pin 15 crosses the aforementioned first hole 36.

In this way, therefore, the first pivot pin 15 ensures the hinging of the transmission arm 11 to at least one of the shoulders 14 of the slider 9, in particular to both shoulders 14.

Even more preferably, if two transmission arms 11 are provided for the retaining element 8, the first pivot pin 15 extends between the two shoulders 14 along the first rotation axis S and crosses the two transmission arms 11 (in particular, it crosses a first hole 36 made in each of the two transmission arms 11) at their first hinge points 12.

More in detail, the use of a first pivot pin 15 that crosses the transmission arm 11 at its first hinge point 12 allows the slider 9 to be quickly and easily connected to the transmission arm 11 itself during the assembly of the present clamping system 1. Operationally, in fact, during the assembly of the present clamping system 1, it is sufficient to make a first through opening on the shoulders 14 of the slider 9, make a second through opening on the base body 3 parallel to the first through opening on the shoulders 14 and placed to intercept the second seat 6, insert the slider 9 into the second seat 6 of the base body 3, insert the retaining element 8 into the guide channel 7 with the transmission arm 11 already hinged to it, place the slider 9 in a position in which the first through opening of its shoulders 14 is aligned with the second through opening of the base body 3 and with the first hole 36 of the transmission arm 11, insert the first pivot pin 15 from the outside into the second through opening of the base body 3 so as to introduce it into the first through opening of the shoulders 14 and into the first hole 36 of the transmission arm 11.

Advantageously, the clamping system 1 according to the invention comprises at least one second pivot pin 37, which extends along the second rotation axis T, is mechanically connected to the transmission arm 11 at its second hinge point 13 and is inserted into an engagement hole 39 made on the retaining element 8.

In particular, the transmission arm 11 is provided with a second hole 38 at its second hinge point 13, and the second pivot pin 37 engages the aforementioned second hole 36. Preferably, if two transmission arms 11 are provided for the retaining element 8, the engagement hole 39 of the retaining element 8 and the second holes 38 of the transmission arms 11 are through holes and the second pivot pin 37 extends along the second rotation axis T, crossing the engagement hole 39 and occupying the second holes 38.

Furthermore, the first pivot pin 15 is advantageously placed to intercept the guide channel 7 and the retaining element 8 is provided with a passage opening 16 crossed by the first pivot pin 15 and having dimensions such as to prevent the contact of the retaining element 8 with the first pivot pin 15.

In this way, it is thus possible to further reduce the height of the present clamping system 1, avoiding that the first pivot pin 15 must be necessarily placed (both when the slider 9 is in the lock position and in the unlock position) outside the guide channel 7 in the second seat 6. Due to this arrangement, indeed it is not necessary for the retaining element 8 to be provided with an eyelet protruding from the guide channel 7 inside the second seat 6 and for the second hinge point 13 to be placed at this protruding eyelet of the retaining element 8.

Furthermore, advantageously, the fact that the first pivot pin 15 is placed crossing the passage opening 16 without ever touching the retaining element 8 itself makes it easy to align the first hinge point 12 and the second hinge point 13 exactly along the extension direction Y of the guide channel 7 when the slider 9 is in the lock position, without therefore having to align them along a direction parallel to the extension direction Y and external to the guide channel 7 (situation that instead happens when the first pivot pin 15 does not intersect the guide channel 7 and the guide element 8 is provided with the eyelet protruding from the guide channel 7 in the second seat, at which eyelet the second hinge point 13 is placed).

Furthermore, due to the fact that the passage opening 16 of the retaining element 8 is sized so that the first pivot pin 15 never touches the retaining element 8 itself during the movement of the slider 9 along the movement direction Z and the movement of the retaining element 8 along the extension direction Y, it is possible to prevent the first pivot pin 15 and the retaining element 8 from interfering with each other, thereby risking to lock each other's movement, and also to prevent stresses from being transmitted directly between the retaining element 8 and the first pivot pin 15 without these stresses being propagated through the transmission arm 11.

Furthermore, preferably, in order to avoid excessively weakening the retaining element 8 due to a lack of material, the passage opening 16 has, on a plane containing the movement direction Z and the extension direction Y, a shape having a linear and arcuate extension R and a thickness Q greater (in particular slightly greater) than the diameter of the first pivot pin 15.

Advantageously, the retaining element 8 extends, along a direction transverse to the extension direction Y of the guide channel 7, between two opposite sides 17, each of which faces one of the shoulders 14.

Preferably, the transmission arm 11 is interposed between one of the shoulders 14 of the slider 9 and the side 17 of the retaining element 8 facing the aforementioned shoulder 14.

Even more preferably, the retaining element 8 is provided with a thinning seat 18 made on one of the two side walls 17 and the transmission arm 11 is at least partially housed in the thinning seat 18.

In this way, therefore, it is possible for the transmission arm 11 to be completely or almost completely contained within the overall dimensions of the retaining element 8, at least when the slider 9 is in the lock position and the retaining element 8 is in the retaining position (in this case, indeed, the first and second hinge points 12, 13 are aligned parallel to the extension direction Y or along the extension direction Y, and therefore the transmission arm 11 itself is parallel to the extension direction Y).

If two transmission arms 11 are provided for the retaining element 8, as above envisaged and in accordance with the illustrated preferred embodiment, the retaining element 8 itself is provided with two thinning seats 18, each of which is formed on a corresponding side 17, and each transmission arm 11 is at least partially housed in a corresponding thinning seat 18.

Advantageously, as above disclosed, the present clamping system 1 comprises more than one guide channel 7, each of which communicates with the first seat 5 and with the second seat 6 and extends in the base body 3 along a corresponding extension direction Y transverse to the reference axis X and different from the extension direction Y of the other guide channels 7.

Furthermore, the present clamping system 1 advantageously comprises more than one retaining element 8, each of which is slidably inserted into a corresponding guide channel 7 and is movable along the extension direction Y of the guide channel 7 between a retaining position, in which it protrudes from the guide channel 7 into the first seat 5 to place itself in abutment against the tie-rod element 2, locking it, and a release position, in which it is spaced from the tie-rod element 2, freeing it.

The motion transmission means 10 also preferably comprise more than one transmission arm 11, at least one for each retaining element 8 (and even more preferably, two retaining elements 8 for each transmission arm 11).

More in detail, in accordance with the preferred embodiment, each transmission arm 11 is hinged, at a first hinge point 12 thereof, to the slider 9 and, at a second hinge point 13 thereof, to a corresponding retaining element 8.

In this way, by providing more than one retaining element 8, each slidable in a guide channel 7 thereof, it is possible to lock the tie-rod element 2 in position, distributing the stresses as evenly as possible.

In particular, the extension directions Y of the guide channels 7 are evenly distributed angularly around the main axis X of the first seat 5.

In accordance with the preferred embodiment illustrated in the attached figures, the base body 3 comprises two guide channels 7, which are spaced form each other by 180° around the reference axis X of the first seat 5 (i.e., in other words, they are opposite each other with respect to the first seat 5 and have their extension directions Y coinciding with each other).

Differently, in accordance with another embodiment not illustrated, the base body 3 comprises three guide channels 7, which are spaced form each other by 120° around the reference axis X of the first seat 5.

Furthermore, in accordance with the preferred embodiment illustrated in the attached figures, the second seat 6 and the slider 9 advantageously extend, with an annular shape, around the first seat 5 and, also, each transmission arm 11 is hinged, at its first hinge point 12, to the slider 9 having annular shape.

In this way, it is particularly easy to move the plurality of retaining elements 8 between the retaining position and the release position with a single slider 9.

Differently, in accordance with a different embodiment not illustrated, it is also possible that the base body 3 comprises more than one second seat 6, each of which is adjacent to the first seat 5, and that the present clamping system 1 comprises more than one slider 9, each of which is slidably inserted into a corresponding second seat 6 along a movement direction Z thereof transverse to the extension direction Y, is mechanically connected to a corresponding retaining element 8 by means of motion transmission means 10 and is movable between a lock position, in which it holds the respective retaining element 8 in the retaining position by means of the motion transmission means 10, and an unlock position, in which it holds the respective retaining element 8 in the release position by means of the motion transmission means 10.

In this case, therefore, the at least one transmission arm 11 for each retaining element 8 is not mechanically connected to a same slider 9 to which the transmission arms 11 corresponding to the other retaining elements 8 are also connected.

In fact, in accordance with this unillustrated embodiment which provides for multiple second seats 6 and multiple sliders 9, the transmission means 10 advantageously comprise at least one transmission arm 11 for each retaining element 8, which transmission arm 11 is hinged, at a hinge point 12 thereof, to a corresponding slider 9 and, at a second hinge point 13 thereof, to the corresponding retaining element 8.

In particular, the arrangement of multiple second seats 6 and multiple sliders 9 can allow each retaining element 8 to be moved between the retaining position and the release position independently of the other retaining elements 8.

The invention thus conceived therefore achieves the intended objects.

## Claims

1. Clamping system (1) for holding a semifinished product in position with respect to an abutment base, comprising:
- a tie-rod element (2), which is intended to be fixed to said semifinished product;
- a base body (3), which is intended to be removably fixed to said abutment base and is provided with:
- a support face (4), which is intended to receive, in abutment, the semifinished product to which said tie-rod element (2) is fixed;
- a first seat (5), which extends along a reference axis (X) thereof transverse to said support face (4), has an access opening (5') thereof on said support face (4) and is susceptible of removably receiving said tie-rod element (2);
- at least one second seat (6), which is adjacent to said first seat (5);
- at least one guide channel (7), which communicates with said first seat (5) and with said second seat (6) and extends in said base body (3) along a corresponding extension direction (Y) transverse to said reference axis (X);
- at least one retaining element (8), which is slidably inserted into said guide channel (7) and is movable along the extension direction (Y) of said guide channel (7) between a retaining position, in which it protrudes from said guide channel (7) into said first seat (5) to place itself in abutment against said tie-rod element (2), locking it, and a release position, in which it is spaced from said tie-rod element (2), freeing it;
- at least one slider (9), which is slidably inserted into said second seat (6) along a movement direction (Z) transverse to said extension direction (Y), is mechanically connected to at least said retaining element (8) by means of motion transmission means (10), and is movable between a lock position, in which it holds at least said retaining element (8) in said retaining position by means of said motion transmission means (10), and an unlock position, in which it holds at least said retaining element (8) in said release position by means of said motion transmission means (10);
said clamping system (1) being **characterised in that** said motion transmission means (10) comprise at least one transmission arm (11) extending between a first end (11'), which is mechanically connected to said slider (9), and a second end (11"), which is mechanically connected to said retaining element (8);
said transmission arm (11) being arranged to rotate with respect to said slider (9) and to said retaining element (8), with said slider (9) moving between said lock position and said unlock position to induce, by means of said transmission arm (11), said retaining element (8) to move between said retaining position and said release position.

2. Clamping system (1) according to claim 1, **characterised in that** said transmission arm (11) is rotatable:
- with respect to said slider (9) about a first rotation axis (S), which intersects said first end (11') and is orthogonal to said movement direction (Z);
- with respect to said retaining element (8) around a second rotation axis (T), which intersects said second end (11") and is orthogonal to the extension direction (Y) of the guide channel (7) in which said retaining element (8) is slidably inserted.

3. Clamping system (1) according to claim 1 or 2, **characterised in that** said transmission arm (11) is arranged to perform a roto-translational motion, wherein:
- said first end (11') performs a displacement along said movement direction (Z) due to said slider (9) moving between said lock position and said unlock position; and
- due to the displacement of said first end (11'), said second end (11") performs a displacement along the extension direction (Y) of said guide channel (7) to move said retaining element (8) between said retaining position and said release position.

4. Clamping system (1) according to any of the preceding claims, **characterised in that**, with said slider (9) in said lock position, the first end (11') and the second end (11") of said transmission arm (11) are aligned parallel to the extension direction (Y) of said guide channel (7) or along the extension direction (Y) of said guide channel (7).

5. Clamping system (1) according to any of the preceding claims, **characterised in that**, with said slider (9) in said unlock position, the first end (11') and the second end (11") of said transmission arm (11) are aligned along a direction inclined with respect to said movement direction (Z) and to said extension direction (Y).

6. Clamping system (1) according to any of the preceding claims, **characterised in that** said motion transmission means (10) comprise two said transmission arms (11) for said retaining element (8), each of which extends between a said first end (11'), which is mechanically connected to said slider (9), and a said second end (11"), which is mechanically connected to said retaining element (8), and is arranged to rotate with respect to said slider (9) and said retaining element (8), with said slider (9) moving between said lock position and said unlock position to induce, by means of said transmission arm (11), said retaining element (8) to move between said retaining position and said release position;
the first ends (11') of the two said transmission arms (11) being placed side by side along a direction orthogonal to the movement direction (Z) and the second ends (11") of the two said transmission arms (11) having said retaining element (8) interposed between them and being placed side-by-side along a direction orthogonal to the extension direction (Y) of the guide channel (7) in which said retaining element (8) is slidably inserted.

7. Clamping system (1) according to any of the preceding claims, **characterised in that** said transmission arm (11) is hinged, by means of a first hinge point (12) obtained at said first end (11'), to said slider (9).

8. Clamping system (1) according to claim 7, **characterised in that** said slider (9) comprises two shoulders (14), which delimit at least part of said guide channel (7) and between which said retaining element (8) is interposed;
said transmission arm (11) being hinged, at its said first hinge point (12), to at least one of the shoulders (14) of said slider (9).

9. Clamping system (1) according to claims 2 and 8, **characterised in that** said first rotation axis (S) is placed at said first hinge point (12);
said slider (9) comprising at least one first pivot pin (15), which extends between said two shoulders (14) along said first rotation axis (S) and crosses said transmission arm (11) at said first hinge point (12).

10. Clamping system (1) according to claim 9, **characterised in that** said first pivot pin (15) is placed to intercept said guide channel (7) and said retaining element (8) is provided with a passage opening (16) crossed by said first pivot pin (15) and dimensioned such as to prevent contact between said retaining element (8) and said first pivot pin (15).

11. Clamping system (1) according to any of the preceding claims, **characterised in that** said transmission arm (11) is hinged, by means of a second hinge point (13) obtained at said second end (11"), to said retaining element (8).

12. Clamping system (1) according to any of the preceding claims, **characterised in that** it comprises:
- more than one said guide channel (7), each of which communicates with said first seat (5) and with said second seat (6) and extends in said base body (3) along a corresponding said extension direction (Y) transverse to said reference axis (X) and different from the extension direction (Y) of the other said guide channels (7);
- more than one said retaining element (8), each of which is slidably inserted in a corresponding said guide channel (7) and is movable along the extension direction (Y) of said guide channel (7) between a said retaining position, in which it protrudes from said guide channel (7) into said first seat (5) to place itself in abutment against said tie-rod element (2), locking it, and a said release position, in which it is spaced from said tie-rod element (2) freeing it;
said motion transmission means (10) comprising more than one said transmission arm (11), at least one for each said retaining element (8).
